# EUROPEAN PATENT SPECIFICATION

(11) **EP 4 250 080 B1**
(45) Date of publication and mention of the grant of the patent: **26.08.2026**
(21) Application number: 21900999.0
(22) Date of filing: 01.12.2021
(51) Int. Cl.: G06F 3/0488, G06F 1/16, G06F 3/0484, G06F 3/04883, G06F 3/04886

(54) **ELECTRONIC DEVICE COMPRISING FLEXIBLE DISPLAY, AND OPERATION METHOD THEREFOR**
ELEKTRONISCHE VORRICHTUNG MIT FLEXIBLER ANZEIGE UND BETRIEBSVERFAHREN DAFÜR
DISPOSITIF ÉLECTRONIQUE COMPRENANT UN ÉCRAN FLEXIBLE, ET PROCÉDÉ DE FONCTIONNEMENT ASSOCIÉ

(30) Priority: 02.12.2020 KR 20200166787
(43) Date of publication of application: 27.09.2023
(73) Proprietor: Samsung Electronics Co., Ltd., Suwon-si, Gyeonggi-do 16677 (KR)
(72) Inventor: NA, Hyoseok, Suwon-si, Gyeonggi-do 16677 (KR); SON, Dongil, Suwon-si, Gyeonggi-do 16677 (KR); JIN, Hyuncheol, Suwon-si, Gyeonggi-do 16677 (KR)
(74) Representative: Nederlandsch Octrooibureau
(86) International application number: PCT/KR2021/018008
(87) International publication number: WO 2022/119311

(56) References cited:
- JP-B2- 6 559 076
- KR-A- 20120 006 187
- KR-A- 20130 102 298
- KR-A- 20140 125 630
- KR-B1- 101 562 582
- US-A1- 2010 167 791
- US-A1- 2019 050 140

## Description

### Technical Field

Embodiments disclosed herein relate to an electronic device for controlling a flexible display and a method for operating the same.

### Background Art

With the development of display technology, various types of display devices are being developed. In particular, display devices such as computers, tablet PCs, and mobile phones have a high penetration rate. Recently, efforts have been made to develop a display device in a new form in order to meet the needs of users who want newer and more diverse functions.

An example of a next-generation display device based on such efforts is a flexible display device. A portable electronic device adopts a display having a large area compared to a housing to provide a wide screen. However, as the size of the display increases, the size of the electronic device also increases, so there is a limit to the size of the display. In order to overcome such a limit, a part of the flexible display as a next-generation display device may be selectively inserted into the housing.

JP 6 559076 B2 describes a portable terminal capable of preventing an erroneous operation when pulling out a flexible touch panel. When the flexible touch panel display is deformed between the reduced state and the enlarged state, for example, when the touch panel display is pulled out in order to change from the reduced state to the enlarged state, if the touch panel display detects a touch operation, the control unit refuses to receive the touch operation. As a result, it is possible to prevent an erroneous operation in the mobile terminal in which the touch panel display can be pulled out or stored.

### Disclosure of Invention

### Technical Problem

Recently, a deformable electronic device using a flexible display has emerged. In order to change the form of the electronic device, a touch input may be detected on a part of the display while a user is controlling the electronic device. Since an unwanted function may be executed due to a touch input that is not desired by the user, convenience may be deteriorated when the user changes the form of the electronic device without touching the display.

Various embodiments of the invention provide a method according to claim 10 and an electronic device according to claim 1 for preventing unwanted touch input errors acquired through a flexible display when the form of the electronic device is changed.

Technical tasks to be achieved herein are not limited to the above-described technical tasks. Other technical tasks, which have not been described above, may be clearly understood by those skilled in the art, to which the disclosure belongs, through the description below.

### Solution to Problem

An electronic device according to an embodiment disclosed herein includes a flexible display, at least one rolling structure configured to expand the flexible display outside the electronic device and change a screen region exposed outside and displaying an execution screen of at least one application, at least one sensor, and at least one processor. While the screen region is expanded or reduced, the at least one processor displays an execution screen of a first application through the screen region of the flexible display, detects a first touch input through a display region of a first region including a first edge of the screen region and a second region including a second edge parallel to the first edge by using the at least one sensor, and determines whether the detected first touch input is an input to expand the screen region. The at least one processor transmits the first touch input detected through the first region and the second region to the first application when the first touch input is not determined to be a touch to expand the screen region, ignores the first touch input detected through the first region and the second region in response to the determination that the first touch input is a touch to expand the screen region, and transmits a second touch input detected through a third region of the flexible display to the first application, wherein the third region corresponds to the display region and is located between the first region and the second region; and when the expansion or reduction of the screen region is stopped, the processor is further configured to release the first region and the second region, and to configure the entire screen region as the display region.

In addition, a method for operating an electronic device according to an embodiment disclosed herein, while a screen region is expanded or reduced, includes displaying an execution screen of a first application through a display region of a screen region of a flexible display, detecting a first touch input through a first region including a first edge of the screen region and a second region including a second edge parallel to the first edge by using at least one sensor, determining whether the detected first touch input is an input to expand the screen region, transmitting the first touch input detected through the first region and the second region to the first application when the first touch input is not determined to be a touch to expand the screen region, and ignoring the first touch input detected through the first region and the second region in response to the determination that the first touch input is a touch to expand the screen region, and transmitting a second touch input detected through a third region of the flexible display to the first application, wherein the third region corresponds to the display region and is located between the first region and the second region; and when the expansion or reduction of the screen region is stopped, the processor is further configured to release the first region and the second region, and to configure the entire screen region as the display region.

In addition, an electronic device according to an embodiment may include a flexible display, at least one rolling actuator configured to expand the flexible display outside the electronic device and change a screen region exposed outside and displaying an execution screen of at least one application, at least one sensor, and at least one processor. The at least one processor may acquire an expansion input for expanding the screen region, may expand the screen region by using the rolling actuator in response to the expansion input, may ignore a first touch input detected through a first region including a first edge of the screen region and a second region including a second edge parallel to the first edge by using the at least one sensor, may detect that the expansion of the screen region is stopped, and may perform an operation corresponding to a second touch input of a user that is input through the first region and the second region in response to the stopping of the expansion.

### Advantageous Effects of Invention

According to various embodiments disclosed herein, touch input errors may be prevented when the form of an electronic device is changed.

According to various embodiments disclosed herein, touch input errors may be prevented, thereby providing usability and convenience to users.

In addition, various effects directly or indirectly identified herein may be provided.

### Brief Description of Drawings

FIG. 1 illustrates an electronic device according to an embodiment.
FIG. 2 illustrates one side surface and a cross-sectional view of an electronic device according to an embodiment.
FIG. 3 illustrates main hardware of an electronic device according to an embodiment.
FIG. 4 illustrates a display region and a grip region based on the expansion or reduction of the screen region of a flexible display in an electronic device according to an embodiment.
FIG. 5 is a flowchart illustrating a process in which a processor transmits, based on the type of touch input detected through a grip region, the touch input to an application in an electronic device according to an embodiment.
FIG. 6 is a flowchart illustrating a process of processing a touch input when expansion of a screen region is stopped in an electronic device according to an embodiment.
FIG. 7 illustrates a user interface indicating that a grip region has been configured during the expansion or reduction of a screen region of an electronic device according to an embodiment.
FIG. 8 is a flowchart in which while a screen region of an electronic device according to an embodiment is being expanded or reduced, an attribute of at least a partial region of the screen region is changed.
FIG. 9 illustrates a scenario in which sizes of a first grip region and a second grip region are changed while the size of a screen region is being changed in an electronic device according to an embodiment.
FIG. 10 illustrates a scenario in which a display is not displayed through a first grip region and a second grip region while the size of a screen region is being changed in an electronic device according to an embodiment.
FIG. 11 illustrates a scenario in which a first region and a second region of a flexible display are controlled while the size of a screen region is being changed in an electronic device according to an embodiment.
FIG. 12 is a flowchart in which in an electronic device according to an embodiment, a screen region is expanded or reduced by using a rolling actuator and a touch input detected through the screen region according to the expansion or the reduction is controlled.
FIG. 13 illustrates a scenario in which when an impact is detected in the direction of expansion of a screen region in an electronic device according to an embodiment, the expansion is stopped.
FIG. 14 is a block diagram of an electronic device in a network environment according to various embodiments.

### Mode for Carrying out the Invention

Hereinafter, various embodiments of the disclosure will be described with reference to the accompanying drawings. However, it should be understood that there is no intent to limit the disclosure to particular embodiments, and the disclosure should be construed to cover various modifications, equivalents, and/or alternatives of embodiments of the disclosure.

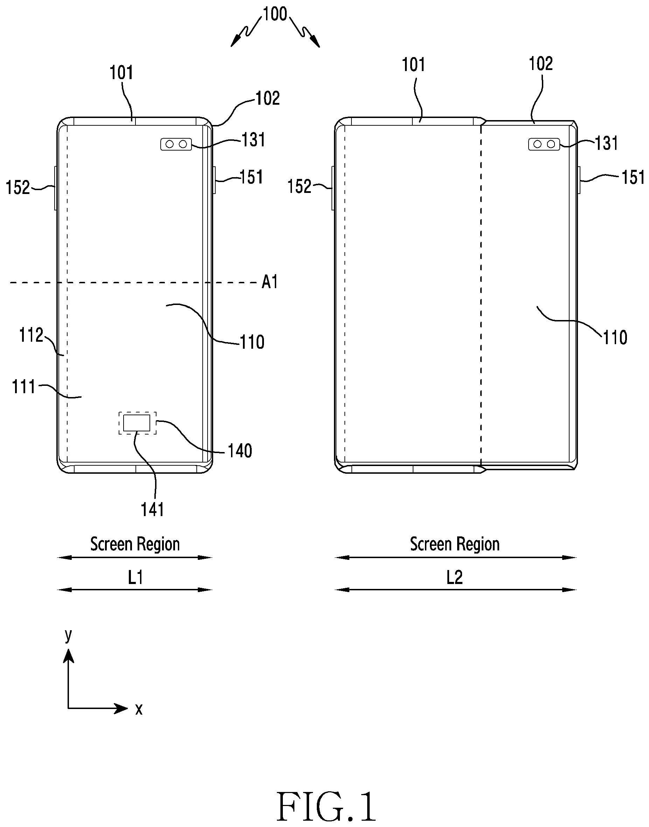

FIG. 1 illustrates an electronic device 100 according to an embodiment.

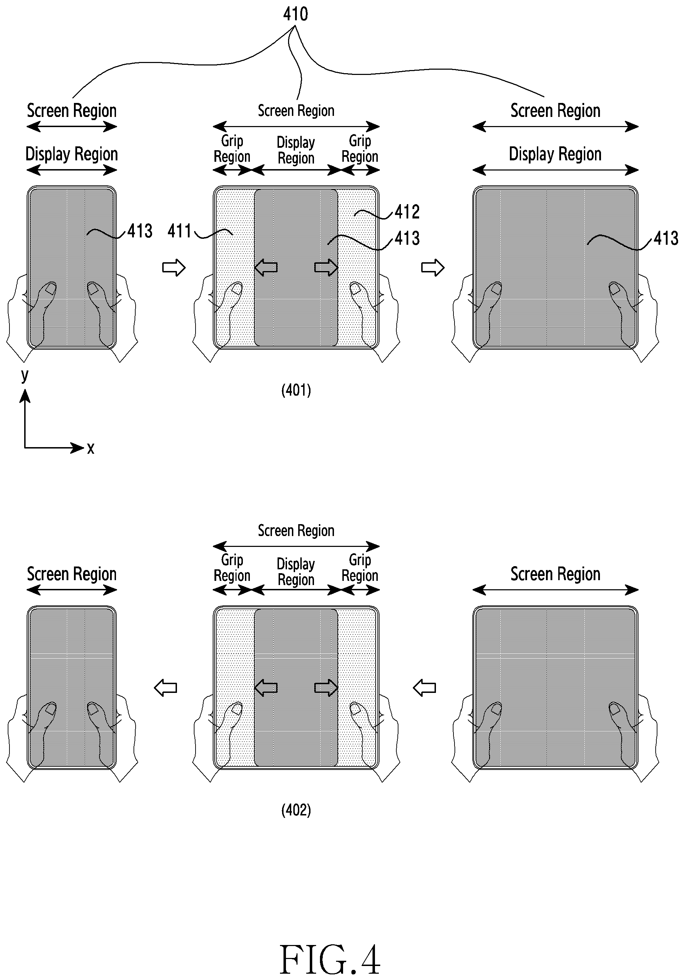

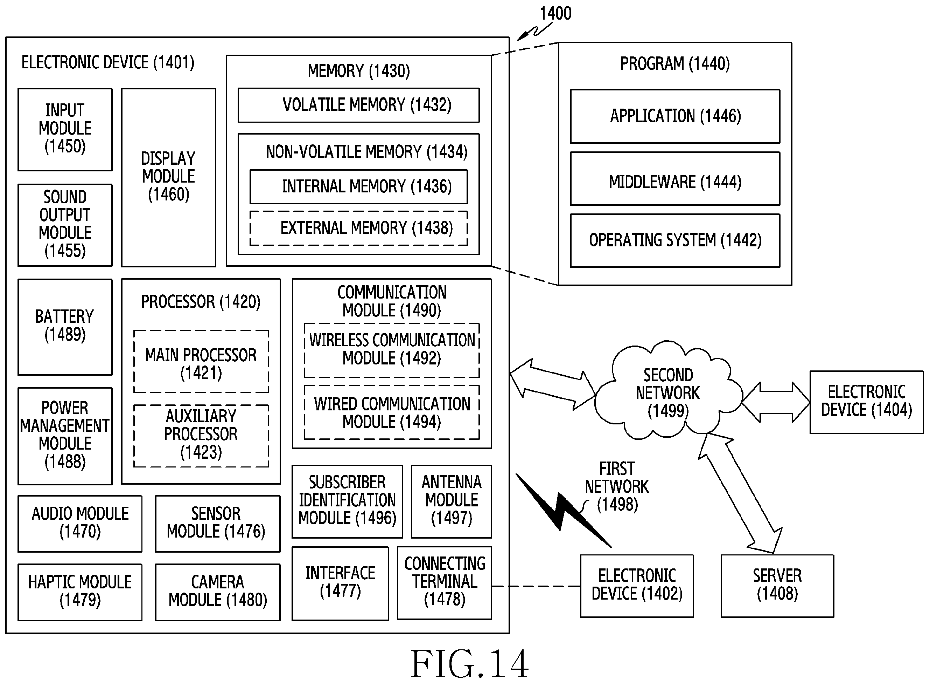

Referring to FIG. 1, the form of an electronic device (e.g., an electronic device 1401 in FIG. 14) 100 may be changed. In the electronic device 100, based on a change in the relative positions of a first housing 101 and a second housing 102, the length of a screen region (e.g., a screen region 410 in FIG. 4) of a flexible display (e.g., the display module 1460 in FIG. 4) 110 may be extended from a first length L1 to a second length L2, or may be reduced from the second length L2 to the first length L1. The form change may be caused by an external force or by a motor (e.g., a rolling actuator) 170 included in the electronic device 100. The external force may be a force by which a user pulls or pushes at least one housing (e.g., the second housing 102) or a force by which the user folds or unfolds the electronic device 100. The second housing 102 may be referred to as a sliding housing.

In an embodiment, when the horizontal length of the screen region 410 is the first length L1, the flexible display 110 may be exposed by a first area with reference to the front surface of the electronic device 100. When the horizontal length of the screen region 410 is the second length L2, the flexible display 110 may be exposed by a second area with reference to the front surface of the electronic device 100. The second area may be larger than the first area.

Referring to FIG. 1, the flexible display 110 may be disposed on the front surface of the electronic device 100 according to an embodiment. In an embodiment, the flexible display 110 may occupy most of the front surface of the electronic device 100. The flexible display 110 and a bezel region surrounding at least some edges of the flexible display 110 may be disposed on the front surface of the electronic device 100. In the example in FIG. 1, the flexible display 110 may include a flat area 111 and a curved area 112 extending from the flat area 111 toward the side surface (e.g., left side) of the electronic device 100 may be included. In FIG. 1, the curved area 112 is illustrated only on one side (e.g., the left side), but it may be understood that the curved area is formed on the opposite side as well.

In an embodiment, the flexible display 110 may extend from the curved area 112 and be inserted into the electronic device 100. The flexible display 110 may be folded or rolled inside the electronic device 100. The flexible display 110 may be rolled at least once on at least one shaft, or may be supported by the shaft and rolled about 1/2 turn or more.

In an embodiment, at least a partial region 140 of the flexible display 110 may include a fingerprint sensor 141 for recognizing a user's fingerprint. The fingerprint sensor 141 may be disposed under the flexible display 110 so as not to be viewed by the user, or may be disposed to make it difficult to view. Furthermore, an additional sensor for user/biometric authentication, in addition to the fingerprint sensor 141 may be disposed in a partial region of the flexible display 110. In another embodiment, the sensor for user/biometric authentication may be disposed in one region of the bezel. For example, an IR sensor for iris authentication may be exposed through one region of the flexible display 110 or through one region of the bezel.

In an embodiment, the electronic device 100 may include one or more front cameras 131. For example, the electronic device 100 may include two front cameras such as a first front camera and a second front camera. In an embodiment, the first front camera and the second front camera may be cameras of the same type which have the same specifications (e.g., pixels), but in another embodiment, the first front camera and the second front camera may be implemented as cameras having different specifications. The electronic device 100 may support functions (e.g., 3D photographing, auto focus, etc.) related to dual cameras through the two front cameras. In an embodiment, the front cameras 131 may not be visually exposed, and may include a hidden under-display camera (UDC). The front surface may be a surface facing the +z direction.

In an embodiment, although not illustrated in the drawing, the electronic device 100 may include one or more rear cameras. Along with the rear camera, various types of sensors or hardware for assisting photographing, such as a flash, may be additionally disposed. For example, a distance sensor (e.g., a TOF sensor) for detecting a distance between a subject and the electronic device 100 may be further included. The rear surface may be a surface facing the -z direction. The description of the front cameras 131 may be identically or similarly applied to the rear cameras.

In an embodiment, at least one physical key may be disposed on the side surface of the electronic device 100. For example, a first function key 151 for turning ON/OFF the display 110 or turning ON/OFF the power of the electronic device 100 may be disposed on a right edge with reference to the front surface of the electronic device 100. In an embodiment, a second function key 152 for controlling the volume or screen brightness of the electronic device 100 may be disposed at a left edge with reference to the front surface of the electronic device 100. In addition, an additional button or key may be disposed on the front or rear surface of the electronic device 100. For example, a physical button or a touch button mapped to a specific function may be disposed in a lower-end region of a front bezel.

The form of the electronic device 100 illustrated in FIG. 1 corresponds to one example, and the form of the device to which the technical idea disclosed herein is applied is not limited. For example, the flexible display 110 may be rolled in the horizontal direction (e.g., the x-axis direction) and/or the vertical direction (e.g., the y-axis direction). In another example, the technical idea disclosed herein may also be applied to a foldable electronic device that adopts a hinge structure so as to be foldable in the horizontal or vertical direction, or a tablet or laptop computer. Hereinafter, for convenience of description, various embodiments will be described based on the electronic device 100 illustrated in FIG. 1.

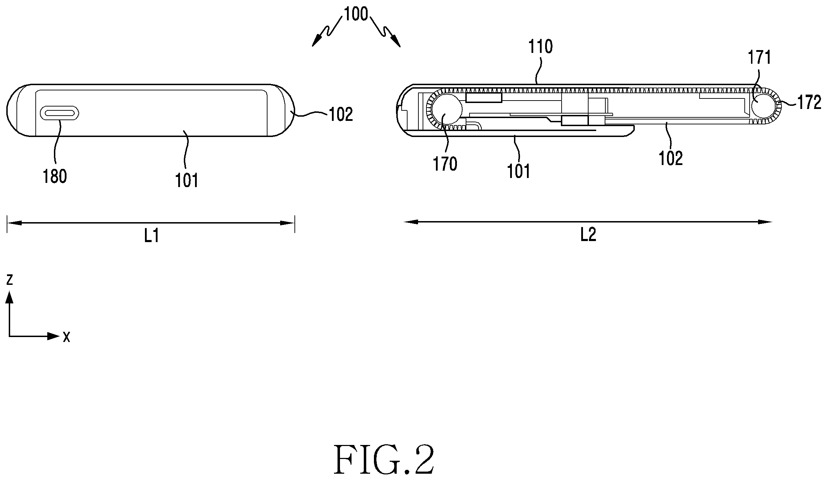

FIG. 2 illustrates one side surface and a cross-sectional view of the electronic device 100 according to an embodiment. In describing FIG. 2, the elements described with reference to FIG. 1 may be briefly described or omitted. The cross-sectional view illustrated in FIG. 2 is a cross-sectional view taken along dotted line A1 in FIG. 1. The electronic device 100 may have a form in which the horizontal length of the electronic device 100 is the first length L1 and a form in which the horizontal length of the electronic device 100 is extended by the second length L2.

In an embodiment, at least a part of the second housing 102 may be inserted into and accommodated in the first housing 101. At least a part of the second housing 102 may protrude from the first housing 101 of the electronic device 100. In an embodiment, the second housing 102 may protect the flexible display 110 from external impact and scratches by covering a part (e.g., the rear surface and/or the side surface) of the flexible display 110.

In an embodiment, the electronic device 100 may include a rolling actuator 170. The rolling actuator 170 may be disposed close to one side surface (e.g., a side surface in the -x direction) of the electronic device 100. The rolling actuator 170 may be connected to at least a part of the first housing 101. The rolling actuator 170 may be implemented in the form of a bar-type gear motor. The rolling actuator 170 may include a rotation gear forming a rotation shaft. The rotating gear may include multiple protrusions.

In an embodiment, the second housing 102 may include a sliding rail 172 at least a part thereof. The sliding rail 172 may include multiple plates. The multiple plates may be arranged at regular intervals on the bottom of the flexible display 110. The sliding rail 172 may be fixed to a shaft 171. The sliding rail 172 may be engaged with the rotation gear of the rolling actuator 170, and may convert rotational movement of the rotation gear into linear movement of the second housing 102. The second housing 102 may protrude from the inside of the first housing 101 to the outside (e.g., the +x direction) through linear movement in a first direction (e.g., the +x direction).

In an embodiment, in response to rotational movement of the rolling actuator 170, the sliding rail 172 engaging with the rotation gear of the rolling actuator 170 may be rolled up or rolled down. For example, when the rolling actuator 170 rotates in a first rotation direction (e.g., the clockwise direction with reference to FIG. 2), the sliding rail 172 may be unfolded while rolled up in the first rotation direction. In another example, when the rolling actuator 170 rotates in a second rotation direction (e.g., the counterclockwise direction with reference to FIG. 2), the sliding rail 172 may be wound while rolled down in the second rotation direction.

In an embodiment, the electronic device 100 may include a first terminal 180. The first terminal 180 may be a charging port for charging the electronic device 100. The first terminal 180 may include various types. For example, the first terminal 180 may be a C-type charging port or a 5-pin type charging port.

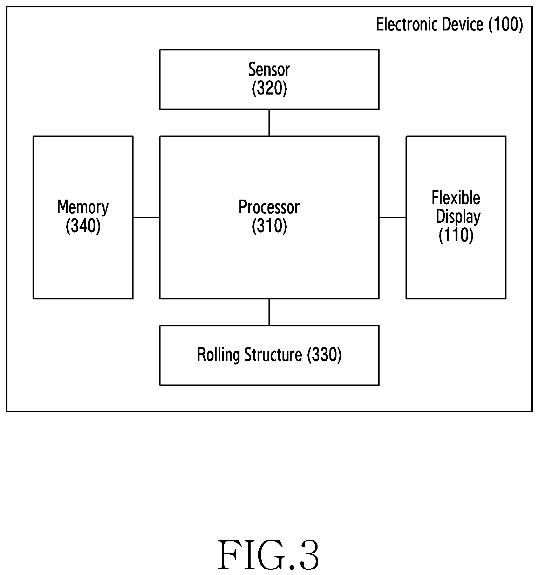

FIG. 3 illustrates main hardware of the electronic device 100 according to an embodiment.

Referring to FIG. 3, the electronic device 100 includes a flexible display 110, a processor (e.g., a processor 1420 in FIG. 14) 310, at least one sensor 320, a rolling structure 330, and may include at least one memory (e.g., a memory 1430 in FIG. 14) 340. The processor 310 may be operatively connected to the flexible display 110, the at least one sensor (e.g., a sensor module 1476 in FIG. 14) 320, the rolling structure 330, and the at least one memory 340.

In an embodiment, the at least one sensor 320 may include a sensor for measuring an extended length of the flexible display 110. The sensor for measuring the extended length may detect the number of rotations of a shaft included in the rolling structure 330. The processor 310 may detect, based on the detected number of rotations of the shaft, that the horizontal length of the screen region 410 is extended from the first length L1 to the second length L2 or reduced from the second length L2 to the first length L1.

In an embodiment, the at least one sensor 320 may include a Hall sensor. The at least one sensor (e.g., the Hall sensor) 320 may detect the displacement of at least one housing (e.g., the first housing 101 and/or the second housing 102) through the position of a magnet moving with the at least one housing. The at least one sensor (e.g., the Hall sensor) 320 may measure the position of the magnet opposite thereto with respect to the at least one sensor (e.g., the Hall sensor) 320 through interaction with the opposing magnet. The at least one sensor (e.g., the Hall sensor) 320 may detect the position of the opposing magnet by measuring a change in a magnetic field formed by the opposing magnet. The processor 310 may detect, based on the detected displacement of the housing, that the horizontal length of the screen region 410 is extended from the first length L1 to the second length L2 or reduced from the second length L2 to the first length L1.

In an embodiment, the at least one sensor 320 may include a touch sensor, a force sensor, and/or a grip sensor. In an embodiment, the touch sensor may be disposed on a layer under at least one region of the flexible display 110. The touch sensor may be disposed on the under layer to recognize a user's touch input. The force sensor may be disposed in the layer under the flexible display 110, the first housing 101, and/or the second housing 102. In an embodiment, the force sensor may acquire a pressure signal generated with respect to the electronic device 100. The force sensor may transfer a pressure signal having a value equal to or greater than a first threshold to the processor 310. The processor 310 may determine the user's touch type and a grip type, based on the acquired touch input signal and pressure signal. In other words, the processor 310 may determine whether the first housing 101 and/or the second housing 102 is pulled by the user's grip or whether a touch on the flexible display 110 to execute an application has been detected.

In an embodiment, the at least one sensor 320 may include a proximity sensor. The proximity sensor may be a sensor capable of detecting a surrounding external object without physical contact. The proximity sensor may include an optical sensor, an ultrasonic sensor, or a capacitive sensor. For example, the proximity sensor may detect an external object by emitting an electromagnetic wave (e.g., an infrared ray) and acquiring a signal that is reflected from the outside and returned.

In an embodiment, the rolling structure 330 may include at least one rotation shaft and/or a rolling motor. The flexible display 110 may be rolled up or rolled down by the operation of the rolling motor. The rolling structure 330 may rotate the at least one rotation shaft. The description made with reference to FIG. 2 and related to rolling may be applied to the rolling structure 330.

In an embodiment, although not illustrated, the electronic device 100 may include a spring structure. When the form of the electronic device 100 is changed, the electronic device 100 may expand the screen region 410 by using the elastic force of the spring instead of the change by the rolling motor.

FIG. 4 illustrates a display region 413 and grip regions 411 and 412 based on the expansion or reduction of the screen region 410 of the flexible display 110 in the electronic device 100 according to an embodiment. The embodiment in FIG. 4 may include an embodiment 401 in which the screen region 410 is expanded and an embodiment 402 in which the screen region 410 is reduced. Hereinafter, the embodiment 401 in which the screen region 410 is expanded will be described, and the description of the embodiment 401 in which the screen region 410 is expanded may be identically or similarly applied to the embodiment 402 in which the screen region 410 is reduced.

Referring to FIG. 4, the processor 310 may roll up or roll down the flexible display 110. The processor 310 may expand or reduce the screen region 410 by the rolling-up or the rolling-down of the flexible display.

In an embodiment, the processor 310 may divide the screen region 410 into at least one region while the screen region 410 is being expanded or reduced. For example, the processor 310 may divide the screen region 410 into a first grip region 411, a second grip region 412, and the display region 413. The display region 413 may be understood as a region in which an execution screen of an application being executed is displayed. Herein, the first grip region 411 may be referred to as a first region, the second grip region 412 may be referred to as a second region, and the display region 413 may be referred to as a third region.

In an embodiment, the processor 310 may not transmit touch inputs detected through the first grip region 411 and the second grip region 412 to an application being executed in the electronic device 100. In other words, the processor 310 may ignore touch inputs detected through the first grip region 411 and the second grip region 412. The ignoring of the touch inputs may be understood as implying that "the processor does not perform operations corresponding to the detected touch inputs of the user".

In an embodiment, the processor 310 may configure a grip region, based on a touch input detected through the at least one sensor (e.g., the touch sensor) 320. For example, the processor 310 may configure the first grip region 411 and the second grip region 412 in the form of a rectangle which is long in the vertical direction (e.g., the y-axis direction) and includes a region where the touch input has been detected.

In an embodiment, although not illustrated in the drawing, the processor 310 may configure grip regions having various forms, based on a touch input detected through the at least one sensor (e.g., the touch sensor) 320. For example, the processor 310 may configure the first grip region 411 and the second grip region 412 in the form of a rectangle which is long in the horizontal direction (e.g., the x-axis direction) and includes the region where a touch input has been detected. For example, the processor 310 may configure the first grip region 411 and the second grip region 412 in the form of a circle including a region where a touch input has been detected.

In an embodiment, the first grip region 411 and the second grip region 412 may include at least one edge of the screen region 410. For example, the first grip region 411 may be a region including a first edge positioned on the left side (e.g., the -x direction) of the screen region 410 when the electronic device 100 is viewed from the front. The second grip region 412 may be a region including a second edge positioned on the right side (e.g., the +x direction) of the screen region 410 when the electronic device 100 is viewed from the front. The second edge may be positioned opposite the first edge on the screen region. The second edge may be parallel to the first edge.

In an embodiment, the processor 310 may change positions of the first grip region 411 and the second grip region 412. Referring to FIG. 4, as the screen region 410 is expanded, the first grip region 411 and the second grip region 412 may be positioned at the outermost peripheries of the screen region 410. In other words, as the screen region 410 is expanded, the processor 310 changes the position of at least one of the first grip region 411 or the second grip region 412 in real time to control the first grip region 411 or the second grip region 412 to be positioned at the outermost periphery of the screen region 410.

In an embodiment, the screen region 410 includes the display region 413. For example, the processor 310 may configure the entire screen region 410 as the display region 413. When the entire screen region 410 is configured as the display region 413, the display region 410 may include the grip regions 411 and 412. In another example, the processor 310 may configure a partial region of the screen region 410 as the display region 413. When the partial region of the screen region 410 is configured as the display region 413, the display region 413 and the grip regions 411 and 412 may be distinguished.

In an embodiment, when the expansion or reduction of the screen region 410 is stopped, the processor 310 may release the configuration for the first grip region 411 and the second grip region 412. In other words, when the expansion or reduction of the screen region 410 is stopped, the processor 310 may release the first grip region 411 and the second grip region 412 and configures the entire screen region 410 as the display region 413.

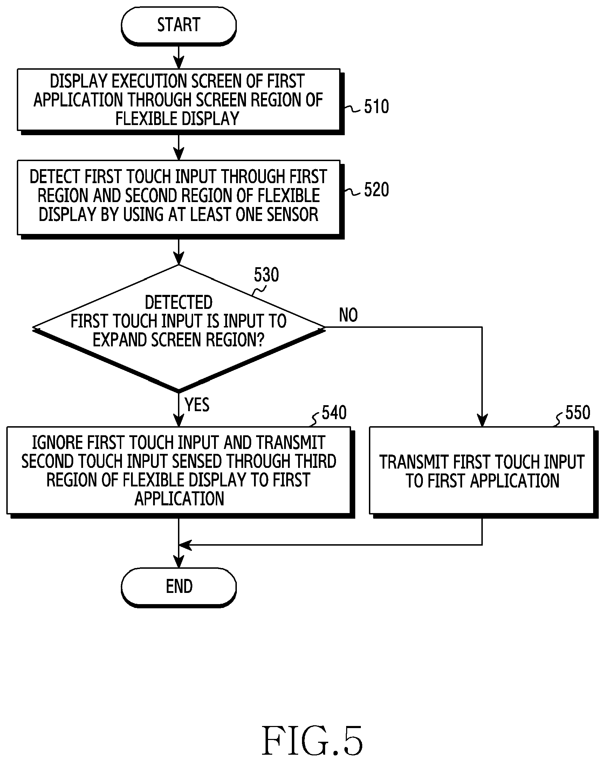

FIG. 5 is a flowchart illustrating a process in which the processor 310 transmits, based on the type of touch input detected through the grip regions 411 and 412, the touch input to an application in the electronic device 100 according to an embodiment. In the following embodiments, operations may be performed sequentially, but are not necessarily performed sequentially. For example, the order of the operations may be changed, or two or more operations may be performed in parallel.

In operation 510 according to an embodiment, the processor 310 displays an execution screen of a first application through the screen region 410 of the flexible display 110.

In operation 520 according to an embodiment, while the execution screen of the first application is being displayed through the screen region 410, the processor 310 detects, through the at least one sensor 320, a first touch input generated in a first region (e.g., the first grip region 411) and a second region (e.g., the second grip region 412) of the flexible display 110.

In operation 530 according to an embodiment, the processor 310 determines whether the detected first touch input is an input to expand the screen region. When it is determined that the detected first touch input is an input to expand the screen region, the processor 310 performs operation 540. When it is not determined that the detected first touch input is an input to expand the screen region, the processor 310 performs operation 550.

In an embodiment, the processor 310 may determine whether the detected first touch input is a grip touch. The processor 310 may determine whether the detected first touch input is a grip touch by both hands. In order to expand the screen region 410, the user may pull the edge of the electronic device 100 with both hands, and the processor 310 may detect whether the first touch input detected in the first grip region 411 and the second grip region 412 is a grip touch by both hands. When the first touch input is determined to be a grip touch by both hands, the processor 310 may determine that the first touch input is an input to expand the screen region 410.

In an embodiment, the processor 310 may determine the type of grip of a user of the electronic device 100 by using a force sensor and/or a grip sensor disposed on at least one side surface (e.g., a left side surface, a right side surface, or a rear surface) of the electronic device 100. The processor 310 may determine the type of grip of the user by using a force sensor and/or a grip sensor disposed on a first side surface (e.g., a side surface in the -x direction), a second side surface (e.g., a side surface in the +x direction), and/or the rear surface of the electronic device 100. When the determined grip type is a pulling grip motion, the processor 310 may determine that the first touch input is an input to expand the screen region 410.

In an embodiment, the processor 310 may determine whether the detected first touch input is not a single touch but a continuous touch. For example, in order to expand the screen region 410, the electronic device must be pulled for a predetermined time or longer, so the processor 310 may determine whether the first touch input is detected for a first time. When the first touch input is detected for the first time, the processor 310 may determine that the first touch input is an input to expand the screen region 410.

In operation 540 according to an embodiment, the processor 310 ignores the first touch input and transmits, to the first application, a second touch input detected through a third region (e.g., the display region 413) of the flexible display 110.

In an embodiment, the processor 310 may ignore the first touch input. In other words, when the detected first touch input is an input to expand the screen region 410, the processor 310 may not transmit the detected first touch input to the first application. The processor 310 may not execute an operation corresponding to the detected first touch input.

In an embodiment, the processor 310 may transmit, to the first application, the second touch input detected through the display region 413 other than the grip regions 411 and 412. The processor 310 may transmit, to the first application, the second touch input detected while the screen region 410 is being expanded or reduced. The processor 310 may perform an operation corresponding to the second touch input.

In operation 550 according to an embodiment, the processor 310 transmits the first touch input to the first application. In other words, when the first touch input is not a touch to expand the screen region 410 but a touch input on the flexible display 110, the processor 310 may transmit the first touch input to the application, and may perform an operation corresponding to the first touch input.

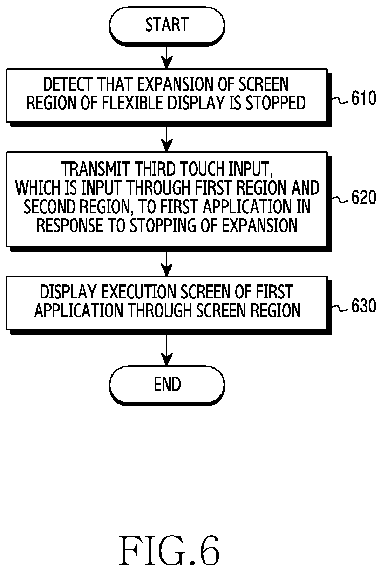

FIG. 6 is a flowchart illustrating a process of processing a touch input when expansion of the screen region 410 is stopped in the electronic device 100 according to an embodiment. The operations in FIG. 6 may be identically or similarly applied even when the screen region 410 is reduced and then stopped.

In operation 610 according to an embodiment, the processor 310 may detect that expansion of a screen region of the flexible display 110 is stopped.

In an embodiment, when the screen region 410 is expanded or reduced and the expansion or reduction operation stops for a second time, the processor 310 may determine that the expansion or reduction of the screen region 410 has been stopped. For example, when there is no change in the size of the screen region 410 for about 0.2 seconds, the processor 310 may determine that expansion or reduction of the screen region 410 has been stopped.

In an embodiment, when the screen region 410 is completely expanded or completely reduced, the processor 310 may determine that expansion or reduction of the screen region 410 has been stopped. For example, when the horizontal length of the screen region 410 reaches the maximum length to which the screen region 410 is capable of being expanded, the processor 310 may determine that the expansion of the screen region 410 has been stopped.

In an embodiment, when the first touch input detected in the first grip region 411 and the second grip region 412 is released, the processor 310 may determine that expansion or reduction of the screen region 410 has been stopped. For example, when the grip of a user to expand the screen region 410 is released, the processor 310 may determine that expansion or reduction of the screen region 410 has been stopped.

In operation 620 according to an embodiment, the processor 310 may transmit, to a first application, a third touch input that is input through a first region (e.g., the first grip region 411) and a second region (e.g., the second grip region 412) in response to the stopping of the expansion. The third touch input may be a touch input detected after the expansion is stopped.

In operation 630 according to an embodiment, the processor 310 may display an execution screen of the first application through the screen region 410. The processor 310 may transmit the third touch input to the first application. The processor 310 may output the execution screen of the first application corresponding to the third touch input through the display region 413.

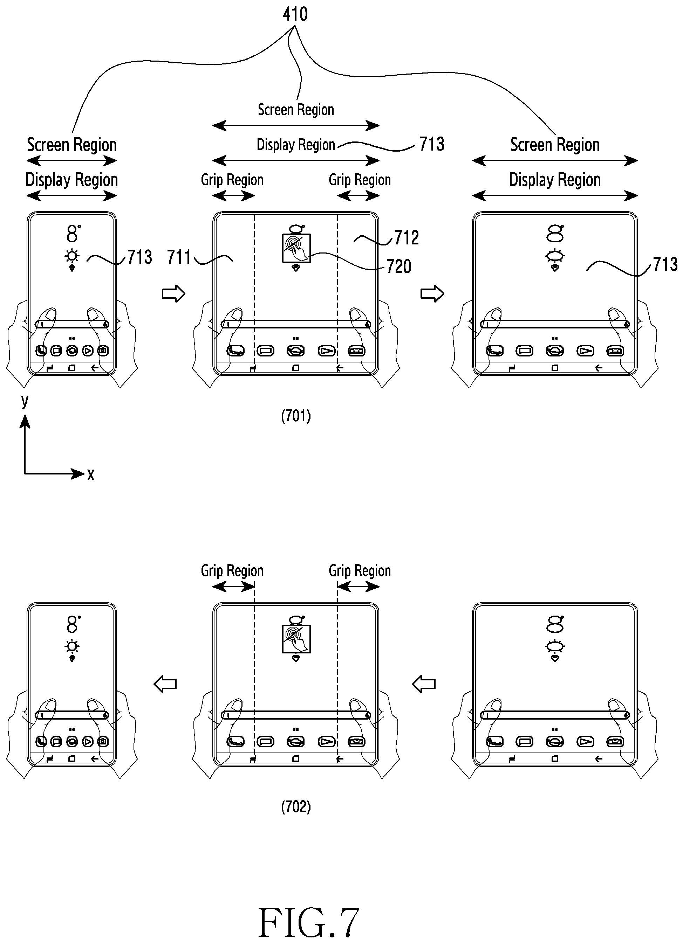

FIG. 7 illustrates a user interface 720 indicating that grip regions 711 and 712 have been configured during the expansion or reduction of a screen region 710 of the electronic device 100 according to an embodiment.

Referring to FIG. 7, in an embodiment, the processor 310 may configure a first grip region 711 and/or a second grip region 712 while the screen region 710 is being expanded or reduced. After configuring the first grip region 711 and/or the second grip region 712, the processor 310 may display the user interface 720 indicating that the first grip region 711 and/or the second grip region 712 have been configured.

In an embodiment, the processor 310 may display, in at least one region of the screen region 410, a message indicating that the first grip region 711 and/or the second grip region 712 have been configured during the expansion or reduction of the screen region 710. For example, the processor 310 may display a message such as "grip region configured" or "touch blocked" in the at least one region of the screen region 410.

In an embodiment, the processor 310 may output a voice message indicating that the first grip region 711 and/or the second grip region 712 have been configured during the expansion or reduction of the screen region 710. For example, the processor 310 may output voice messages such as "The grip region has been configured" and "Some touches are restricted" through a speaker.

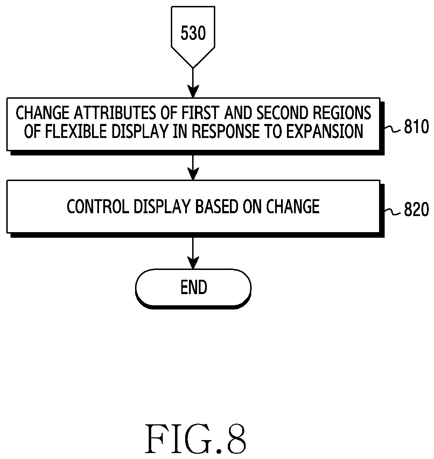

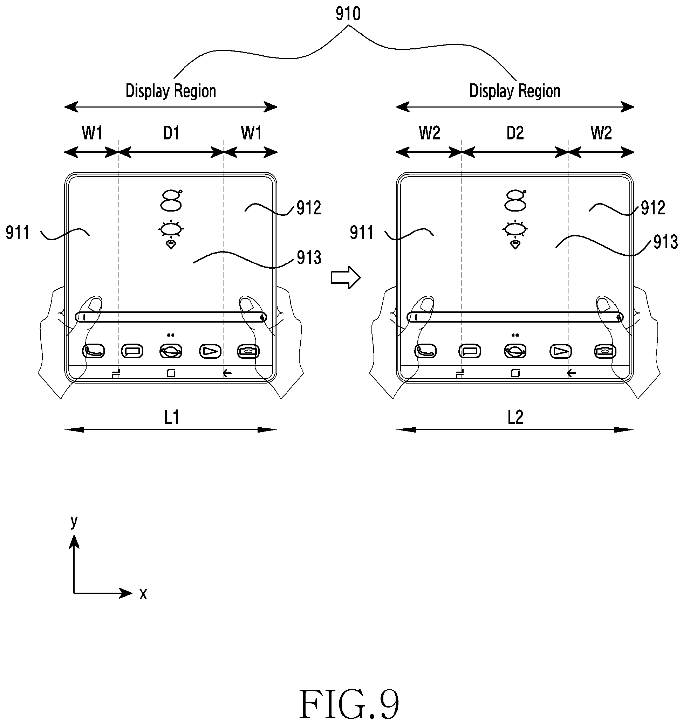

FIG. 8 is a flowchart in which while a screen region (e.g., the screen region 410 in FIG. 4) of the electronic device 100 according to an embodiment is being expanded or reduced, an attribute of at least a partial region of the screen region 410 is changed. Operations in FIG. 8 may be performed after operation 530 in FIG. 5. In other words, when the first touch input detected through the first grip region 411 and the second grip region 412 is an input to expand the screen region 410, the processor 310 may perform operation 810. The embodiment in FIG. 8 will be described in detail with reference to FIGS. 9 to 11.

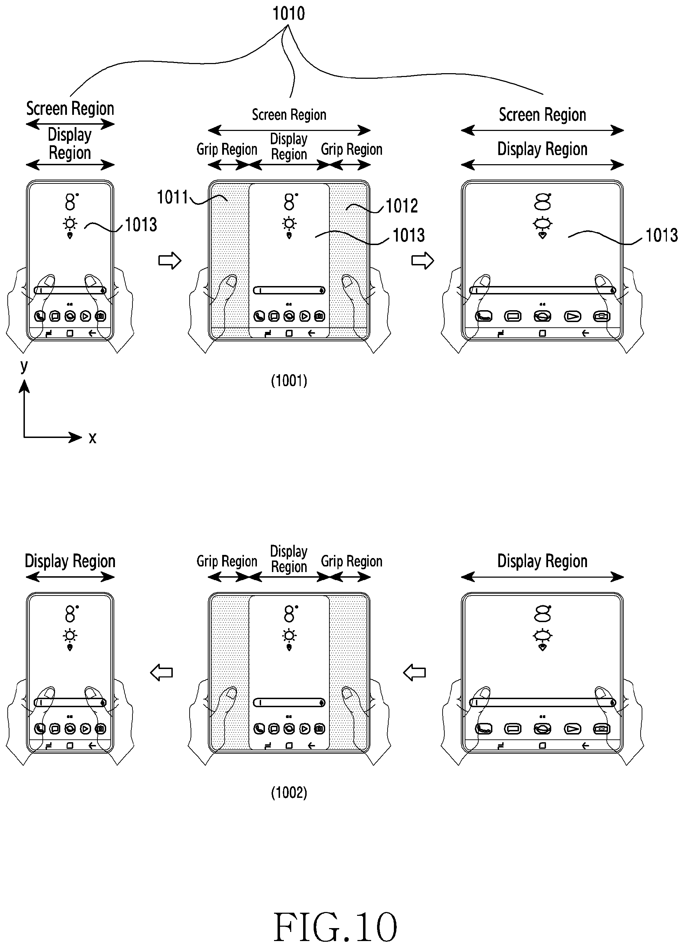

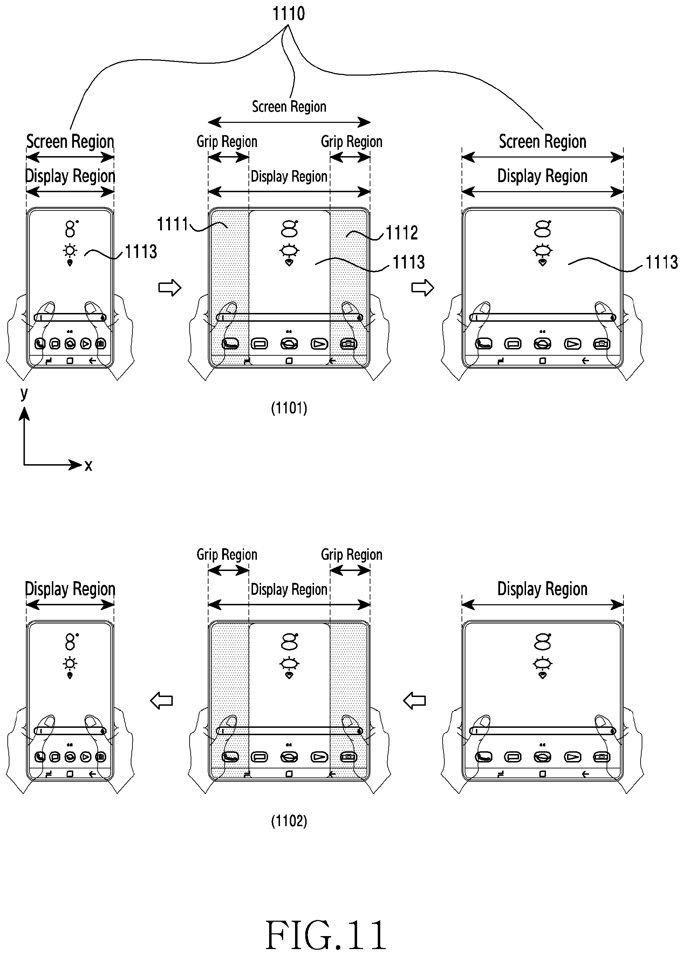

In operation 810 according to an embodiment, in response to the expansion of the screen region 410, the processor 310 may change attributes of the first grip region 411 of the flexible display 110 and attributes of the second grip region 412. The attributes of the grip regions 411 and 412 may include size, deactivation, brightness, and transparency of the grip regions 411 and 412. The size of the grip regions 411 and 412 will be described in detail with reference to FIG. 9 below. The deactivation of the grip regions 411 and 412 will be described in detail with reference to FIG. 10 below. The brightness and/or transparency of the grip regions 411 and 412 will be described in detail with reference to FIG. 11 below.

In operation 820 according to an embodiment, the processor 310 may control the flexible display 110 based on the change. For example, the processor 310 may display the grip regions 411 and 412, based on the change in attributes of the grip regions 411 and 412, so that the grip regions 411 and 412 are identified. In another example, the processor 310 may determine, based on the change in attributes of the grip regions 411 and 412, the scope of the screen region 410 in which an execution screen of an application being executed is to be output.

FIG. 9 illustrates a scenario in which sizes of a first grip region 911 and a second grip region 912 are changed while the size of a screen region 910 is being changed in the electronic device 100 according to an embodiment. The sizes may be understood as the area of a region, or the scope of a region. In describing FIG. 9, the operations illustrated in FIG. 8 may be briefly described or the description thereof may be omitted.

In an embodiment, the processor 310 may change the size of the first grip region 911 and/or the size of the second grip region 912. The processor 310 may change, based on the size of the screen region 910, the size of the first grip region 911 and/or the second grip region 912. In other words, based on the size of the screen region 910 changing as the form of the electronic device 100 changes, the processor 310 may change the size of the first grip region 911 and/or the second grip region 912. For example, when the horizontal length of the screen region 910 is a first length L1, the horizontal length of the first grip region 911 and/or the second grip region 912 may be W1. For example, when the horizontal length of the screen region 910 is a second length L2, the horizontal lengths of the first grip region 911 and the second grip region 912 may be W2. L2 may be longer than L1. W2 may be longer than W1.

In an embodiment, the processor 310 may change the size of the first grip region 911 and/or the second grip region 912 in proportion to the size of the screen region 910. For example, when the horizontal length of the screen region 910 is the first length L1, the processor 310 may configure the horizontal length of the first grip region 911 and/or the second grip region 912 to be W1. When the screen region 910 is expanded to have a horizontal length of the first length L1 x 1.3, the processor 310 may configure the horizontal length of the first grip region 911 and/or the second grip region 912 to be W1 x 1.3.

FIG. 10 illustrates a scenario in which a display is not displayed through a first grip region 1011 and a second grip region 1012 while the size of a screen region 1010 is being changed in the electronic device 100 according to an embodiment. In describing FIG. 10, the operations illustrated in FIG. 8 may be briefly described or the description thereof may be omitted.

In an embodiment, the processor 310 may deactivate the first grip region 1011 and/or the second grip region 1012 while the screen region 1010 is being expanded or reduced. The processor 310 may partially control the flexible display 110 through a display driver integrated circuit (DDI). The processor 310 may deactivate the first grip region 1011 and/or the second grip region 1012 based on a partial screen control signal. For example, the processor 310 may partially control power of the first grip region 1011 and/or the second grip region 1012 to perform power-off. In another example, the processor 310 may black out the first grip region 1011 and/or the second grip region 1012. In another example, the processor 310 may switch the first grip region 1011 and/or the second grip region 1012 to a low power mode.

In an embodiment, the processor 310 may display a user interface through the screen region 1010 other than the deactivated first grip region 1011 and/or the deactivated second grip region 1012. In other words, the processor 310 may output, on a display area 1013, an execution screen of an application being executed. The processor 310 may not output the execution screen of the application being executed on the deactivated first grip region 1011 and/or the deactivated second grip region 1012.

FIG. 11 illustrates a scenario in which a first region and a second region of the flexible display 110 are controlled while the size of a screen region is being changed in an electronic device according to an embodiment. In describing FIG. 11, the operations illustrated in FIG. 8 may be briefly described or the description thereof may be omitted.

In an embodiment, the processor 310 may control the color value of at least partial regions of a screen region 1110. The processor 310 may change the color value of a first grip region 1111 and/or a second grip region 1112 from a first color value to a second color value while the screen region 1110 is being expanded or reduced. For example, the processor 310 may maintain the first color value of a display region 1113 other than the grip regions 1111 and 1112 and configure the color values of the first grip region 1111 and the second grip region 1112 as the second color value, thereby visually indicating that the grip regions 1111 and 1112 correspond to grip regions.

In an embodiment, the processor 310 may control the brightness value of at least partial regions of the screen region 1010. For example, while the screen region 1010 is being expanded or reduced, the processor 310 may increase or decrease brightness values of the first grip region 1011 and the second grip region 1012 to display the first grip region 1011 and the second grip region 1012.

In an embodiment, the processor 310 may adjust transparency of at least partial regions of the screen region 1010. For example, while the screen region 1010 is being expanded or reduced, the processor 310 may increase the transparency of the first grip region 1011 and the second grip region 1012 to display the first grip region 1011 and the second grip region 1012.

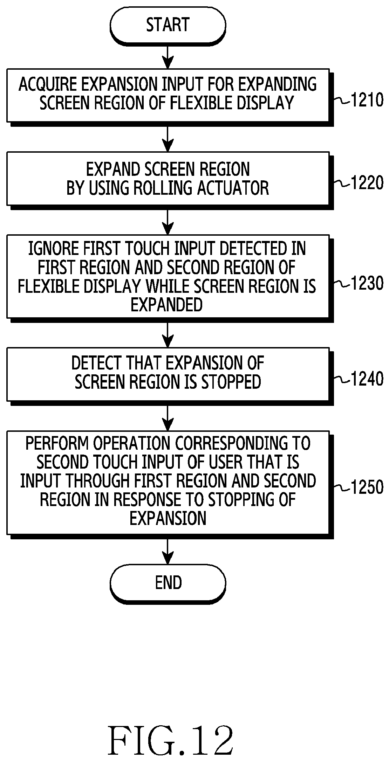

FIG. 12 is a flowchart in which, in the electronic device 100 according to an embodiment, the screen region 410 is expanded or reduced by using a rolling actuator and a touch input detected through the screen region 410 according to the expansion or the reduction is controlled.

In operation 1210 according to an embodiment, the processor 310 may acquire an expansion input for expanding the screen region 410 of the flexible display 110. For example, the processor 310 may acquire a user's touch input corresponding to the expansion input through the at least one sensor (e.g., the touch sensor) 320. The processor 310 may acquire a touch input that expands the screen region through a touch detection sensor positioned on a layer under at least one region of the flexible display 110. In another example, the processor 310 may acquire an input for a function key (e.g., the first function key 151 or the second function key 152) configured to perform the expansion. In another example, the processor 310 may acquire a voice command to expand the screen region 410.

In operation 1220 according to an embodiment, the processor 310 may expand the screen region 410 by driving at least one motor. The processor 310 may expand the screen region 410 by driving the rolling actuator in response to the expansion input for expanding the screen region 410.

In operation 1230 according to an embodiment, the processor 310 may ignore a first touch input detected in a first region (e.g., the first grip region 411) and a second region (e.g., the second grip region 412) of the flexible display 110 while the screen region 410 is being expanded. The processor 310 may not transmit the first touch input detected in the first grip region 411 and the second region 412 to an application. The processor 310 may not perform an operation corresponding to the detected first touch input. On the other hand, the processor 310 may perform an operation corresponding to a touch input acquired through the display region 413 other than the first grip region 411 and the second region 412 while the screen region 410 is being expanded or reduced.

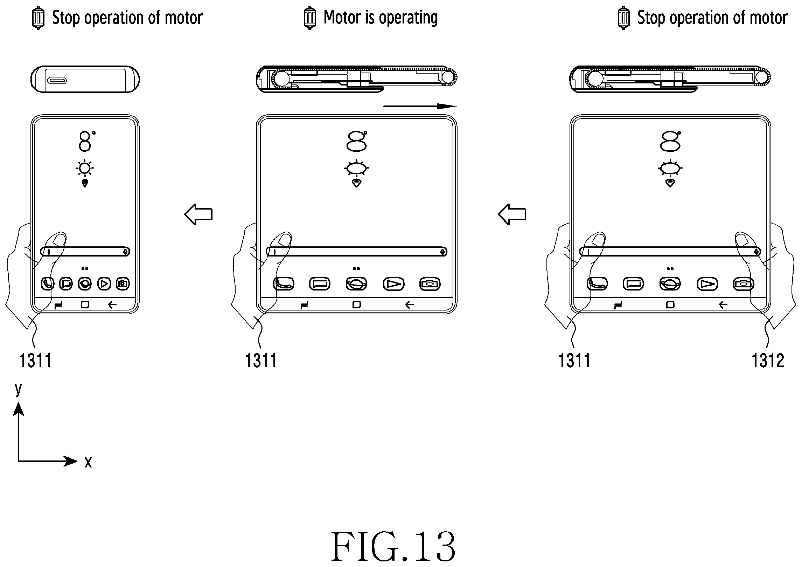

In operation 1240 according to an embodiment, the processor 310 may detect that the expansion is stopped. Operation 1240 may correspond to operation 610 in FIG. 6. An embodiment in which the expansion is stopped will be additionally described with reference to FIG. 13 below.

In operation 1250 according to an embodiment, after the expansion is stopped, the processor 310 may acquire a user's second touch input that is performed through the first region (e.g., the first grip region 411) and the second region (e.g., the second grip region 412). The processor 310 may perform an operation corresponding to the second touch input. This may correspond to operations 620 and 630 in FIG. 6.

FIG. 13 illustrates a scenario in which when an impact is detected in the direction of expansion of the screen region 410 in the electronic device 100 according to an embodiment, the expansion is stopped.

Referring to FIG. 13, in an embodiment, the processor 310 may expand the screen region 410 of the flexible display 110 in response to acquiring a user's expansion input. The processor 310 may expand the screen region 410 in a first direction (e.g., the +x direction) by using a motor (e.g., the rolling actuator 170). When expanding the screen region 410, the processor 310 may configure at least a part of the screen region 410 (e.g., the left side of the electronic device 100) as a grip region (e.g., the first grip region 411). In other words, the processor 310 may block a touch input detected through the first grip region 411 configured as the grip region and may acquire a touch input detected through a region other than the first grip region. The processor 310 may perform an operation corresponding to the acquired touch input.

In an embodiment, the processor 310 may detect impact in the expansion direction of the screen region 410 while the screen region 410 is being expanded. The processor 310 may detect impact on the right side surface of the electronic device 100 when viewed from the front. The right side surface of the electronic device 100 may be one side surface of the second housing (e.g., the second housing 102 in FIG. 1). For example, in a state where the left side surface of the electronic device 100 is gripped by the user's left hand 1311, the processor 310 may detect that the right side surface of the electronic device 100 is gripped by the user's right hand 1312 while the screen region 410 is being expanded. The grip may be detected by a touch sensor, a force sensor, and/or a grip sensor. In another example, the processor 310 may detect an external object (e.g., a cup) by using a proximity sensor.

In an embodiment, the processor 310 may stop expansion of the screen region 410 in response to detecting the impact while the screen region 410 is being expanded. For example, the processor 310 may stop the expansion of the screen region 410 in response to detecting the grip of the electronic device by the user's right hand 1312 while the screen region 410 is being expanded. For another example, the processor 310 may stop the expansion of the screen region 410 in response to detecting the external object (e.g., the cup) while the screen region 410 is being expanded.

In an embodiment, while the screen region 410 is being expanded, the processor 310 may acquire an input for stopping the expansion. For example, the processor 310 may acquire a voice command to stop the expansion. The processor 310 may acquire a voice command such as "stop expansion" or "quit expansion". In another example, when the screen region 410 is expanded, the processor 310 may display a user interface to stop the expansion in one region of the screen region 410. While the screen region 410 is being expanded, the processor 310 may acquire an input for a user interface to stop the expansion. For another example, when the screen region 410 is expanded, the processor 310 may configure the first function key 151 as an expansion stopping key. The processor 310 may acquire an input for the first function key 151 while the screen region 410 is being expanded.

In an embodiment, while the screen region 410 is being expanded, the processor 310 may stop the expansion of the screen region 410 in response to the acquisition of the input for stopping the expansion. As described above, the stopping input may include a voice input, a display touch input, and/or a physical key (e.g., the first function key 151) input. However, this is only an example, and the expansion of the screen region 410 may be stopped in various ways.

Fig. 14 is a block diagram illustrating an electronic device 1401 in a network environment 1400 according to various embodiments. Referring to Fig. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module (SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to one embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, a HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to one embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, an electronic device 100 may include a flexible display 110, at least one rolling structure 330 configured to expand the flexible display 110 outside the electronic device 100 and change a screen region 410 exposed outside and displaying an execution screen of at least one application, at least one sensor 320, and at least one processor 310. The at least one processor 310 may be operatively connected to the flexible display 110, the at least one rolling structure 330, and the at least one sensor 320.

According to an embodiment, the at least one processor 310 may display an execution screen of a first application through the screen region 410 of the flexible display 110. The processor 310 may detect a first touch input through a first region (e.g., the first grip region 411) including a first edge of the screen region 410 and a second region (e.g., the second grip region 412) including a second edge parallel to the first edge by using the at least one sensor 320. The processor 310 may determine whether the detected first touch input is an input to expand the screen region 410. The processor 310 may transmit the first touch input detected through the first region 411 and the second region 412 to the first application when the first touch input is not determined to be a touch to expand the screen region, may ignore the first touch input detected through the first region 411 and the second region 412 in response to the determination that the first touch input is a touch to expand the screen region, and may transmit a second touch input detected through a third region (e.g., the display region 413) of the flexible display 110 to the first application.

In an embodiment, the processor 310 may detect that the expansion of the screen region 410 is stopped. The processor 310 may detect a third touch input, which is an input after the expansion of the screen region 410 is stopped, through the first region 411 and the second region 412. The processor 310 may perform an operation corresponding to the third touch input.

In an embodiment, the third region 413 may include the first region 411 and the second region 412.

In an embodiment, the rolling structure 330 may additionally include a rolling motor, and the at least one processor 310 may display a user interface to expand the screen region 410 in one region of the flexible display 110. The processor 310 may acquire an expansion input for expanding the screen region 410 through the user interface. The processor 310 may expand the screen region 410 by driving the rolling motor in response to the acquisition of the expansion input.

In an embodiment, the processor 310 may stop the driving of the rolling motor when an external impact is detected in an expansion direction of the screen region 410.

In an embodiment, the at least one sensor 320 may include at least one of a touch sensor, a force sensor, and a grip sensor. The at least one processor 310 may determine whether the first touch input is an input to expand the screen region 410, based on data acquired through at least one of the touch sensor, the force sensor, and the grip sensor.

In an embodiment, the at least one processor 310 may change sizes of the first region 411 and the second region 412, based on the expansion of the screen region 410.

In an embodiment, the at least one processor 310 may provide a user interface, indicating that the first region 411 and the second region 412 have been configured, through the flexible display 110 when the screen region 410 is expanded or reduced.

In an embodiment, the at least one processor 310 may change, based on the expansion of the screen region 410, the position of at least one of the first region 411 or the second region 412 in real time such that the first region 411 and the second region 412 are positioned at outermost peripheries of the screen region 410.

In an embodiment, the at least one processor 310 may deactivate the first region 411 and the second region 412 while the screen region 410 is being expanded or reduced. The processor 310 may change at least one of transparency or brightness of the first region 411 and the second region 412 while the screen region 410 is being expanded or reduced.

A method for operating an electronic device 100 according to an embodiment may include displaying an execution screen of a first application through a screen region 410 of a flexible display 110, detecting a first touch input through a first region 411 including a first edge of the screen region 410 and a second region 412 including a second edge parallel to the first edge by using at least one sensor 320, determining whether the detected first touch input is an input to expand the screen region 410, transmitting the first touch input detected through the first region 411 and the second region 412 to the first application when the first touch input is not determined to be a touch to expand the screen region, and ignoring the first touch input detected through the first region 411 and the second region 412 in response to the determination that the first touch input is a touch to expand the screen region, and transmitting a second touch input detected through a third region 413 of the flexible display 110 to the first application.

In an embodiment, the method for operating the electronic device 100 may include detecting that the expansion of the screen region 410 is stopped, detecting a third touch input through the first region 411 and the second region 412, and performing an operation corresponding to the third touch input. The third touch input may be an input after the expansion is stopped.

In an embodiment, the method for operating the electronic device 100 may include changing sizes of the first region 411 and the second region 412 in real time in response to the expansion of the screen region 410.

In an embodiment, the method for operating the electronic device 100 may include providing a user interface, indicating that the first region 411 and the second region 412 have been configured, through the flexible display 110 in response to the expansion of the screen region 410.

In an embodiment, the method for operating the electronic device 100 may include deactivating the first region 411 and the second region 412 while the screen region 410 is being expanded or reduced, or changing at least one of transparency or brightness of the first region 411 and the second region 412.

An electronic device 100 according to an embodiment may include a flexible display 110, at least one rolling actuator configured to expand the flexible display 110 outside the electronic device 100 and change a screen region 410 exposed outside and displaying an execution screen of at least one application, at least one sensor 320, and at least one processor 310. The at least one processor 310 may acquire an expansion input for expanding the screen region 410 and may expand the screen region 410 by using the rolling actuator in response to the expansion input. In response to the expansion, the processor 310 may ignore a first touch input detected through a first region 411 including a first edge of the screen region 410 and a second region 412 including a second edge parallel to the first edge by using the at least one sensor 320. The processor 310 may detect that the expansion of the screen region 410 is stopped. The processor 310 may perform an operation corresponding to a second touch input of a user that is input through the first region 411 and the second region 412 in response to the stopping of the expansion. The second input of the user may be a touch after the stopping.

In an embodiment, the processor 310 may stop the expansion of the screen region 410 when an external impact is detected in the expansion direction of the screen region 410.

In an embodiment, the at least one sensor 320 may include at least one of a touch sensor, a force sensor, or a grip sensor, and the at least one processor 310 may determine whether the first touch input is an input to expand the screen region 410, based on data acquired through at least one of the touch sensor, the force sensor, and the grip sensor.

In an embodiment, the at least one processor 310 may provide a user interface, indicating that the first region 411 and the second region 412 have been configured, through the flexible display 110 when the screen region 410 is expanded or reduced.

In an embodiment, the at least one processor 310 may determine, based on the position of the first touch input, the area or form of the first region 411 and the second region 412.

## Claims

1. An electronic device (100) comprising:
a flexible display (110);
at least one rolling structure (330) configured to expand the flexible display (110) outside the electronic device and change a screen region (410) exposed outside and displaying an execution screen of at least one application;
at least one sensor (320); and
at least one processor (310) operatively connected to the flexible display (110), the at least one rolling structure (330), and the at least one sensor (320),
wherein the at least one processor (310) is configured to, while the screen region is expanded or reduced:
display an execution screen of a first application through a display region of the screen region (410) of the flexible display (110);
detect a first touch input through a first region comprising a first edge of the screen region (410) and a second region comprising a second edge parallel to the first edge by using the at least one sensor (320);
determine whether the detected first touch input is an input to expand the screen region (410);
transmit the first touch input detected through the first region and the second region to the first application in case that the first touch input is not determined to be a touch to expand the screen region (410); and
ignore the first touch input detected through the first region and the second region, in response to the determination that the first touch input is a touch to expand the screen region (410), and transmit a second touch input detected through a third region of the flexible display (110) to the first application,
wherein the third region corresponds to the display region and is located between the first region and the second region; and
when the expansion or reduction of the screen region is stopped, the processor is further configured to release the first region and the second region, and to configure the entire screen region as the display region.

2. The electronic device (100) of claim 1, wherein the at least one processor (310) is configured to:
detect that the expansion of the screen region (410) is stopped;
after the expansion is stopped, detect a third touch input through the display region; and
perform an operation corresponding to the third touch input.

3. The electronic device (100) of claim 1, wherein the rolling structure (330) comprises a rolling motor, and
wherein the at least one processor (310) is configured to:
display a user interface to expand the screen region (410) in one region of the flexible display (110);
acquire an expansion input for expanding the screen region (410) through the user interface; and
expand the screen region (410) by driving the rolling motor in response to the acquisition of the expansion input.

4. The electronic device (100) of claim 3, wherein the at least one processor (310) is configured to stop the driving of the rolling motor in case that an external impact is detected in an expansion direction of the screen region (410).

5. The electronic device (100) of claim 1, wherein the at least one sensor (320) comprises at least one of a touch sensor, a force sensor, and a grip sensor, and
the at least one processor (310) is configured to determine whether the first touch input is an input to expand the display region (413), based on data acquired through at least one of the touch sensor, the force sensor, and the grip sensor.

6. The electronic device (100) of claim 5, wherein the at least one processor (310) is configured to change sizes of the first region (411) and the second region (412), based on the expansion of the display region (413).

7. The electronic device (100) of claim 1, wherein the at least one processor (310) is configured to provide a user interface, indicating that the first region (411) and the second region (412) have been configured, through the flexible display (110) in case that the screen region (410) is expanded or reduced.

8. The electronic device (100) of claim 1, wherein the at least one processor (310) is configured to change, based on the expansion of the screen region (410), a position of at least one of the first region or the second region in real time such that the first region and the second region are positioned at outermost peripheries of the screen region (410).

9. The electronic device (100) of claim 1, wherein the at least one processor (310) is configured to, while the screen region (410) is being expanded or reduced:
change at least one of transparency or brightness of the first region and the second region.

10. A method for operating an electronic device (100), the method comprising:
while a screen region is expanded or reduced:
displaying (510) an execution screen of a first application through a display region of the screen region (410) of a flexible display (110), the screen region (410) being exposed outside the electronic device (100) and displaying an execution screen of at least one application;
detecting (520) a first touch input through a first region (411) comprising a first edge of the screen region and a second region (412) comprising a second edge parallel to the first edge by using at least one sensor (320);
determining (530) whether the detected first touch input is an input to expand the screen region (410);
transmitting (550) the first touch input detected through the first region (411) and the second region (412) to the first application in case that the first touch input is not determined to be a touch to expand the screen region (410); and
ignoring (540) the first touch input detected through the first region (411) and the second region (412), in response to the determination that the first touch input is a touch to expand the screen region (410), and transmitting a second touch input detected through a third region (413) of the flexible display (110) to the first application,
wherein the third region corresponds to the display region and is located between the first region and the second region; and
when the expansion or reduction of the screen region is stopped. releasing the first region and the second region, and configuring the entire screen region as the display region.

11. The method of claim 10, comprising:
detecting (610) that the expansion of the screen region (410) is stopped;
after the expansion is stopped, detecting (620) a third touch input through the display region; and
performing an operation corresponding to the third touch input.

12. The method of claim 10, comprising changing sizes of the first region (911) and the second region (912) in real time in response to the expansion of the screen region (410).

13. The method of claim 10, comprising providing a user interface, indicating that the first region and the second region have been configured, through the flexible display (110) in response to the expansion of the screen region (410).

14. The method of claim 10, comprising, while the screen region (410) is being expanded or reduced, changing at least one of transparency or brightness of the first region and the second region.

## Patentansprüche

1. Elektronische Vorrichtung (100), die Folgendes umfasst:
ein flexibles Display (110);
mindestens eine Rollstruktur (330), die so konfiguriert ist, dass sie das flexible Display (110) außerhalb der elektronischen Vorrichtung erweitert und einen nach außen freiliegenden Bildschirmbereich (410) ändert, der einen Ausführungsbildschirm mindestens einer Anwendung anzeigt;
mindestens einen Sensor (320); und
mindestens einen Prozessor (310), der mit dem flexiblen Display (110), der mindestens einen Rollstruktur (330) und dem mindestens einen Sensor (320) operativ verbunden ist,
wobei der mindestens eine Prozessor (310) während der Erweiterung oder Reduzierung des Bildschirmbereichs zu Folgendem konfiguriert ist:
Anzeigen eines Ausführungsbildschirms einer ersten Anwendung durch einen Anzeigebereich des Bildschirmbereichs (410) des flexiblen Displays (110);
Erkennen einer ersten Berührungseingabe durch einen ersten Bereich, der eine erste Kante des Bildschirmbereichs (410) umfasst, und einen zweiten Bereich, der eine zweite Kante parallel zu der ersten Kante umfasst, unter Verwendung des mindestens einen Sensors (320);
Bestimmen, ob die erkannte erste Berührungseingabe eine Eingabe zum Erweitern des Bildschirmbereichs (410) ist;
Übertragen der durch den ersten Bereich und den zweiten Bereich erkannten ersten Berührungseingabe an die erste Anwendung, falls nicht bestimmt wird, dass die erste Berührungseingabe eine Berührung zum Erweitern des Bildschirmbereichs (410) ist; und
Ignorieren der durch den ersten Bereich und den zweiten Bereich erkannten ersten Berührungseingabe als Reaktion auf die Bestimmung, dass die erste Berührungseingabe eine Berührung zum Erweitern des Bildschirmbereichs (410) ist, und Übertragen einer durch einen dritten Bereich des flexiblen Displays (110) erkannten zweiten Berührungseingabe an die erste Anwendung,
wobei der dritte Bereich dem Anzeigebereich entspricht und sich zwischen dem ersten Bereich und dem zweiten Bereich befindet; und
wenn die Erweiterung oder Reduzierung des Bildschirmbereichs gestoppt wird, ist der Prozessor ferner so konfiguriert, dass er den ersten Bereich und den zweiten Bereich freigibt und den gesamten Bildschirmbereich als Anzeigebereich konfiguriert.

2. Elektronische Vorrichtung (100) nach Anspruch 1, wobei der mindestens eine Prozessor (310) zu Folgendem konfiguriert ist:
Erkennen, dass die Erweiterung des Bildschirmbereichs (410) gestoppt wird;
nachdem die Erweiterung gestoppt wurde, Erkennen einer dritten Berührungseingabe durch den Anzeigebereich; und
Ausführen eines Vorgangs, der der dritten Berührungseingabe entspricht.

3. Elektronische Vorrichtung (100) nach Anspruch 1, wobei die Rollstruktur (330) einen Rollmotor umfasst, und
wobei der mindestens eine Prozessor (310) zu Folgendem konfiguriert ist:
Anzeigen einer Benutzeroberfläche zum Erweitern des Bildschirmbereichs (410) in einem Bereich des flexiblen Displays (110);
Erfassen einer Erweiterungseingabe zum Erweitern des Bildschirmbereichs (410) durch die Benutzeroberfläche; und
Erweitern des Bildschirmbereichs (410) durch Antreiben des Rollmotors als Reaktion auf die Erfassung der Erweiterungseingabe.

4. Elektronische Vorrichtung (100) nach Anspruch 3, wobei der mindestens eine Prozessor (310) so konfiguriert ist, dass er den Antrieb des Rollmotors stoppt, falls ein äußerer Aufprall in Ausdehnungsrichtung des Bildschirmbereichs (410) erkannt wird.

5. Elektronische Vorrichtung (100) nach Anspruch 1, wobei der mindestens eine Sensor (320) einen Berührungssensor, einen Kraftsensor und/oder einen Griffsensor umfasst, und
der mindestens eine Prozessor (310) so konfiguriert ist, dass er basierend auf Daten, die über den Berührungssensor, den Kraftsensor und/oder den Griffsensor erfasst werden, bestimmt, ob die erste Berührungseingabe eine Eingabe zum Erweitern des Anzeigebereichs (413) ist.

6. Elektronische Vorrichtung (100) nach Anspruch 5, wobei der mindestens eine Prozessor (310) so konfiguriert ist, dass er die Größe des ersten Bereichs (411) und des zweiten Bereichs (412) basierend auf der Erweiterung des Anzeigebereichs (413) ändert.

7. Elektronische Vorrichtung (100) nach Anspruch 1, wobei der mindestens eine Prozessor (310) so konfiguriert ist, dass er über das flexible Display (110) eine Benutzeroberfläche bereitstellt, die anzeigt, dass der erste Bereich (411) und der zweite Bereich (412) konfiguriert wurden, falls der Bildschirmbereich (410) erweitert oder reduziert wird.

8. Elektronische Vorrichtung (100) nach Anspruch 1, wobei der mindestens eine Prozessor (310) so konfiguriert ist, dass er basierend auf der Erweiterung des Bildschirmbereichs (410) in Echtzeit eine Position des ersten Bereichs und/oder des zweiten Bereichs so ändert, dass sich der erste Bereich und der zweite Bereich an den äußersten Rändern des Bildschirmbereichs (410) befinden.

9. Elektronische Vorrichtung (100) nach Anspruch 1, wobei der mindestens eine Prozessor (310) während der Erweiterung oder Reduzierung des Bildschirmbereichs (410) zu Folgendem konfiguriert ist:
Ändern einer Transparenz und/oder Helligkeit des ersten Bereichs und des zweiten Bereichs.

10. Verfahren zum Betreiben einer elektronischen Vorrichtung (100), wobei das Verfahren Folgendes umfasst:
während ein Bildschirmbereich erweitert oder reduziert wird:
Anzeigen (510) eines Ausführungsbildschirms einer ersten Anwendung durch einen Anzeigebereich des Bildschirmbereichs (410) eines flexiblen Displays (110), wobei der Bildschirmbereich (410) außerhalb der elektronischen Vorrichtung (100) freiliegt und einen Ausführungsbildschirm mindestens einer Anwendung anzeigt;
Erkennen (520) einer ersten Berührungseingabe durch einen ersten Bereich (411), der eine erste Kante des Bildschirmbereichs umfasst, und einen zweiten Bereich (412), der eine zweite Kante parallel zu der ersten Kante umfasst, unter Verwendung mindestens eines Sensors (320);
Bestimmen (530), ob die erkannte erste Berührungseingabe eine Eingabe zum Erweitern des Bildschirmbereichs (410) ist;
Übertragen (550) der durch den ersten Bereich (411) und den zweiten Bereich (412) erkannten ersten Berührungseingabe an die erste Anwendung, falls die erste Berührungseingabe nicht als Berührung zum Erweitern des Bildschirmbereichs (410) bestimmt wird; und
Ignorieren (540) der durch den ersten Bereich (411) und den zweiten Bereich (412) erkannten ersten Berührungseingabe als Reaktion auf die Bestimmung, dass die erste Berührungseingabe eine Berührung zum Erweitern des Bildschirmbereichs (410) ist, und Übertragen einer durch einen dritten Bereich (413) des flexiblen Displays (110) erkannten zweiten Berührungseingabe an die erste Anwendung,
wobei der dritte Bereich dem Anzeigebereich entspricht und sich zwischen dem ersten Bereich und dem zweiten Bereich befindet; und
wenn die Erweiterung oder Reduzierung des Bildschirmbereichs gestoppt wird, Freigeben des ersten Bereichs und des zweiten Bereichs und Konfigurieren des gesamten Bildschirmbereichs als Anzeigebereich.

11. Verfahren nach Anspruch 10, das Folgendes umfasst:
Erkennen (610), dass die Erweiterung des Bildschirmbereichs (410) gestoppt wird;
nachdem die Erweiterung gestoppt wurde, Erkennen (620) einer dritten Berührungseingabe durch den Anzeigebereich; und
Ausführen eines Vorgangs, der der dritten Berührungseingabe entspricht.

12. Verfahren nach Anspruch 10, das das Ändern der Größe des ersten Bereichs (911) und des zweiten Bereichs (912) in Echtzeit als Reaktion auf die Erweiterung des Bildschirmbereichs (410) umfasst.

13. Verfahren nach Anspruch 10, das das Bereitstellen einer Benutzeroberfläche umfasst, die anzeigt, dass der erste Bereich und der zweite Bereich durch das flexible Display (110) als Reaktion auf die Erweiterung des Bildschirmbereichs (410) konfiguriert wurden.

14. Verfahren nach Anspruch 10, das während der Erweiterung oder Reduzierung des Bildschirmbereichs (410) das Ändern der Transparenz und/oder der Helligkeit des ersten Bereichs und des zweiten Bereichs umfasst.

## Revendications

1. Dispositif électronique (100) comprenant :
un affichage flexible (110) ;
au moins une structure de roulement (330) configurée pour étendre l'affichage flexible (110) à l'extérieur du dispositif électronique et modifier une zone d'écran (410) exposée à l'extérieur et affichant un écran d'exécution d'au moins une application ;
au moins un capteur (320) ; et
au moins un processeur (310) connecté de manière fonctionnelle à l'affichage flexible (110), à l'au moins une structure de roulement (330), et à l'au moins un capteur (320),
où l'au moins un processeur (310) est configuré pour, pendant que la zone d'écran est étendue ou réduite :
afficher un écran d'exécution d'une première application via une zone d'affichage de la zone d'écran (410) de l'affichage flexible (110) ;
détecter une première entrée tactile via une première zone comprenant un premier bord de la zone d'écran (410) et une deuxième zone comprenant un deuxième bord parallèle au premier bord en utilisant l'au moins un capteur (320) ;
déterminer si la première entrée tactile détectée est une entrée pour étendre la zone d'écran (410) ;
transmettre la première entrée tactile détectée via la première zone et la deuxième zone à la première application dans le cas où la première entrée tactile n'est pas déterminée comme étant un toucher pour étendre la zone d'écran (410) ; et
ignorer la première entrée tactile détectée via la première zone et la deuxième zone, en réponse à la détermination que la première entrée tactile est un toucher pour étendre la zone d'écran (410), et transmettre une deuxième entrée tactile détectée via une troisième zone de l'affichage flexible (110) à la première application,
où la troisième zone correspond à la zone d'affichage et est située entre la première zone et la deuxième zone ; et
lorsque l'extension ou la réduction de la zone d'écran est arrêtée, le processeur est en outre configuré pour libérer la première zone et la deuxième zone, et pour configurer la totalité de la zone d'écran en tant que zone d'affichage.

2. Dispositif électronique (100) selon la revendication 1, où l'au moins un processeur (310) est configuré pour :
détecter que l'extension de la zone d'écran (410) est arrêtée ;
une fois l'extension arrêtée, détecter une troisième entrée tactile via la zone d'affichage ; et
effectuer une opération correspondant à la troisième entrée tactile.

3. Dispositif électronique (100) selon la revendication 1, où la structure de roulement (330) comprend un moteur de roulement, et
où l'au moins un processeur (310) est configuré pour :
afficher une interface utilisateur pour étendre la zone d'écran (410) dans une zone de l'affichage flexible (110) ;
acquérir une entrée d'extension pour étendre la zone d'écran (410) via l'interface utilisateur ; et
étendre la zone d'écran (410) en entraînant le moteur de roulement en réponse à l'acquisition de l'entrée d'extension.

4. Dispositif électronique (100) selon la revendication 3, où l'au moins un processeur (310) est configuré pour arrêter l'entrainement du moteur de roulement dans le cas où un impact externe est détecté dans une direction d'extension de la zone d'écran (410).

5. Dispositif électronique (100) selon la revendication 1, où l'au moins un capteur (320) comprend au moins l'un des éléments suivants : un capteur tactile, un capteur de force, et un capteur de préhension, et
l'au moins un processeur (310) est configuré pour déterminer si la première entrée tactile est une entrée pour étendre la zone d'affichage (413), en fonction des données acquises via au moins l'un des éléments suivants : le capteur tactile, le capteur de force, et le capteur de préhension.

6. Dispositif électronique (100) selon la revendication 5, où l'au moins un processeur (310) est configuré pour modifier les tailles de la première zone (411) et de la deuxième zone (412), en fonction de l'extension de la zone d'affichage (413).

7. Dispositif électronique (100) selon la revendication 1, où l'au moins un processeur (310) est configuré pour fournir une interface utilisateur, indiquant que la première zone (411) et la deuxième zone (412) ont été configurées, via l'affichage flexible (110) dans le cas où la zone d'écran (410) est étendue ou réduite.

8. Dispositif électronique (100) selon la revendication 1, où l'au moins un processeur (310) est configuré pour modifier, en fonction de l'extension de la zone d'écran (410), une position d'au moins l'une de la première zone ou de la deuxième zone en temps réel de sorte que la première zone et la deuxième zone sont positionnées au niveau des périphéries les plus extérieures de la zone d'écran (410).

9. Dispositif électronique (100) selon la revendication 1, où l'au moins un processeur (310) est configuré pour, pendant que la zone d'écran (410) est en cours d'extension ou de réduction :
modifier au moins l'une de la transparence ou de la luminosité de la première zone et de la deuxième zone.

10. Procédé pour faire fonctionner un dispositif électronique (100), le procédé comprenant :
pendant qu'une zone d'écran est étendue ou réduite :
afficher (510) un écran d'exécution d'une première application via une zone d'affichage de la zone d'écran (410) d'un affichage flexible (110), la zone d'écran (410) étant exposée à l'extérieur du dispositif électronique (100) et affichant un écran d'exécution d'au moins une application ;
détecter (520) une première entrée tactile via une première zone (411) comprenant un premier bord de la zone d'écran et une deuxième zone (412) comprenant un deuxième bord parallèle au premier bord en utilisant au moins un capteur (320) ;
déterminer (530) si la première entrée tactile détectée est une entrée pour étendre la zone d'écran (410) ;
transmettre (550) la première entrée tactile détectée via la première zone (411) et la deuxième zone (412) à la première application dans le cas où la première entrée tactile n'est pas déterminée comme étant un toucher pour étendre la zone d'écran (410) ; et
ignorer (540) la première entrée tactile détectée via la première zone (411) et la deuxième zone (412), en réponse à la détermination que la première entrée tactile est un toucher pour étendre la zone d'écran (410), et transmettre une deuxième entrée tactile détectée via une troisième zone (413) de l'affichage flexible (110) à la première application,
où la troisième zone correspond à la zone d'affichage et est située entre la première zone et la deuxième zone ; et
lorsque l'extension ou la réduction de la zone d'écran est arrêtée, libérer la première zone et la deuxième zone, et configurer la totalité de la zone d'écran en tant que zone d'unité d'affichage.

11. Procédé selon la revendication 10, comprenant :
détecter (610) que l'extension de la zone d'écran (410) est arrêtée ;
une fois l'extension arrêtée, détecter (620) une troisième entrée tactile via la zone d'affichage ; et
effectuer une opération correspondant à la troisième entrée tactile.

12. Procédé selon la revendication 10, comprenant la modification des tailles de la première zone (911) et de la deuxième zone (912) en temps réel en réponse à l'extension de la zone d'écran (410).

13. Procédé selon la revendication 10, comprenant une interface utilisateur, indiquant que la première zone et la deuxième zone ont été configurées, via l'affichage flexible (110) en réponse à l'extension de la zone d'écran (410).

14. Procédé selon la revendication 10, comprenant, pendant que la zone d'écran (410) est en cours d'extension ou de réduction, la modification d'au moins l'une de la transparence ou de la luminosité de la première zone et de la deuxième zone.
